# EUROPÄISCHE PATENTSCHRIFT

(11) **EP 1 957 950 B1**
(45) Veröffentlichungstag und Bekanntmachung des Hinweises auf die Patenterteilung: **02.06.2010**
(21) Anmeldenummer: 06819341.6
(22) Anmeldetag: 09.11.2006
(51) Int. Cl.: G01L 19/00, G01L 7/08

(54) **KOMBINIERTER DRUCK-TEMPERATURSENSOR MIT ZENTRISCHER TEMPERATURMESSUNG**
COMBINED PRESSURE/TEMPERATURE SENSOR WITH CENTRIC TEMPERATURE MEASUREMENT
SONDE COMBINEE DE PRESSION ET DE TEMPERATURE COMPORTANT UNE MESURE CENTRALE DE LA TEMPERATURE

(30) Priorität: 29.11.2005 DE 102005056762
(43) Veröffentlichungstag der Anmeldung: 20.08.2008
(73) Patentinhaber: ROBERT BOSCH GMBH, 70442 Stuttgart (DE)
(72) Erfinder: ENGELHARDT, Joerg, 71254 Ditzingen (DE); STOLL, Oliver, 72762 Reutlingen (DE); ROESSER, Christian, 71723 Grossbottwar (DE); LEDERMANN, Markus, 71679 Asperg (DE); WARTH, Stefan, 71254 Ditzingen (DE)
(86) Internationale Anmeldenummer: PCT/EP2006/068255
(87) Internationale Veröffentlichungsnummer: WO 2007/062968

(56) Entgegenhaltungen:
- EP-A1- 1 101 639
- EP-A2- 1 457 676
- US-A1- 2004 016 251
- US-B1- 6 588 222

## Beschreibung

### Stand der Technik

Zukünftig in Fahrzeugen eingesetzte Klimaanlagen werden CO₂-Klimaanlagen sein, da gemäß der EU-Gesetzgebung das bisher in Fahrzeugklimaanlagen eingesetzte Kältemittel R134a bis zum Jahre 2016 verboten werden wird.

Im Gegensatz zu konventionellen Klimaanlagen für Fahrzeuge, in denen das Kältemittel R134a eingesetzt wird, werden bei CO₂-Klimaanlagen sowohl ein Druck- als auch ein Temperatursignal nach dem Verdichter für die Regelung benötigt. Die Verwendung von zwei separaten Sensoren zur Erfassung des Drucksignals und zur Erfassung des Temperatursignals ginge mit einem sehr großen Aufwand einher, weshalb angestrebt wird, die beiden genannten Signale mit einem einzigen Sensor, einem kombinierten Druck- und Temperatursensor, zu erfassen.

Kombinierte Druck- und Temperatursensoren sind z. B. aus EP 1 521 061 A1 bekannt, der DE 101 09 095 A1 und der DE 197 45 244 A1.

Die Lösung gemäß DE 101 09 095 A1 verwendet einen Frontmembransensor mit einem aufgesetzten Messfinger. Dieses Konzept ist jedoch im Membranbereich sehr empfindlich, so dass ein Schutzschirm einzubauen ist. Diese Lösung ist eher für Rennsportapplikationen ausgelegt und geht daher mit einer äußerst geringen Standzeit einher.

Gemäß DE 197 45 244 A1 wird ein separates Gewindestück für den Temperatursensor eingesetzt, welches mit einem O-Ring abgedichtet ist. Dieses Konzept ist recht aufwändig und teuer und daher für die Großserienfertigung wenig geeignet. Ferner ist bei der Verwendung eines O-Ringes als Dichtelement zu berücksichtigen, dass der O-Ring, bei dem es sich um ein Elastomerbauteil handelt, generell bei Anwendung an Klimaanlagen, bei denen durchaus tiefere Temperaturen auftreten können, zur Versprödung neigt und die Dichtwirkung des O-Rings über die Standzeit der Klimaanlage erheblich nachlässt, so - dass Undichtigkeiten auftreten können.

DE 102 32 315 A1 bezieht sich auf einen kombinierten Temperatur- und Druckfühler und ein Verfahren zur Ermittlung von physikalischen Kenngrößen. Bei dem aus DE 102 32 315 A1 bekannten kombinierten Temperatur- und Druckfühler handelt es sich um einen solchen, der bei fluidischen Systemen eingesetzt werden kann. In einem gemeinsamen Grundkörper ist mindestens ein Kanal angeordnet, wobei der Grundkörper druckdicht in einer Öffnung einer Wandung befestigt ist. Bei dem im Wesentlichen rotationssymmetrisch ausgebildeten Grundkörper ist zentrisch ein durchgehender Druckmesskanal angeordnet, wobei im Grundkörper etwa parallel zu dem Druckmesskanal mindestens ein Temperaturmesskanal exzentrisch angeordnet und die druckdichte Befestigung des Grundkörpers in der Öffnung der Wandung lösbar ausgebildet ist. Der der Wandung abgewandete Endbereich des Druckmesskanals verläuft in einer hülsenförmigen Verlängerung des Grundkörpers, die weiter von der Wandung entfernt ist als das der Wandung abgewandte Ende des Temperaturmesskanals. An dem der Wandung abgewandten Ende der Verlängerung ist ein Drucksensor mit einer Membran angeordnet.

Ein entscheidender Nachteil der oben genannten Konzepte ist, dass die Temperaturmessung bei den dort vorgestellten kombinierten Druck- und Temperatursensoren exzentrisch erfolgt. Dies hat zur Folge, dass die Temperaturmessung ungenauer wird und zudem von der Einbauposition des Temperaturfühlers abhängt.

### Offenbarung der Erfindung

Der vorliegenden Erfindung liegt die Aufgabe zugrunde, ein möglichst einfaches und großserientaugliches Konzept für einen kombinierten Druck- und Temperatursensor, bei dem insbesondere eine zentrische Position des Temperaturfühlers verwirklicht ist, die eine sehr genaue Temperaturmessung ermöglicht, bereitzustellen.

Der erfindungsgemäß vorgeschlagenen Lösung folgend, wird ein kombinierter Druck- und Temperatursensor vorgeschlagen, in dessen ein- oder mehrteilig ausbildbaren Sensorkörper ein in diesem mittig ausgebildeter Kanal zur Aufnahme eines Temperaturfühlers verläuft. Der mittig im ein- oder mehrteilig ausgebildeten Sensorkörper verlaufende Kanal zur Aufnahme des Temperaturfühlers ist an einer medienzugewandten Seite des ein- oder mehrteiligen Sensorkörpers mit einer einen zentrisch ausgebildeten, domförmigen Ansatz aufweisenden Abdeckung abgedichtet. In diesen in der Abdeckung ausgebildeten domförmigen Ansatz kann zur Verbesserung der Wärmeleitung ein wärmeleitendes Vergussmaterial aufgenommen sein, in dem der Kopf des Temperaturfühlers eingebettet ist.

In dieser ersten Ausführungsvariante des kombinierten Druck- und Temperatursensors verlaufen den Druck des Mediums übertragende Kanäle beidseits des im Zentrum des ein- oder mehrteiligen Sensorkörpers und übertragen den Druck des Mediums an eine auf der medienabgewandten Seite des Sensorkörpers angeordnete Membran, die vorzugsweise als eine Ringmembran ausgebildet ist. Die an der medienabgewandeten Seite des Sensorkörpers aufgebrachte, so z. B. aufgeschweißte Ringmembran umfasst eine in deren Zentrum liegende Öffnung, durch welche die Kontakte des im Zentrum des ein- oder mehrteiligen Sensorkörpers angeordneten Temperaturfühlers herausgeführt werden.

Anstelle von zwei Druckkanälen, die neben dem zentrisch ausgeführten Kanal zur Aufnahme des Temperaturfühlers verlaufen, kann auch eine Mehrzahl von Druckkanälen in den ein- oder mehrteiligen Sensorkörper eingebracht werden, welche den zentrisch ausgeführten Kanal zur Aufnahme des Temperaturfühlers ringförmig umschließen.

Neben einer einteiligen Bauform des Sensorkörpers kann dieser z. B. auch aus zwei konzentrisch zueinander angeordneten Rohren aufgebaut werden, wobei der Hohlraum des Innenrohres zur Aufnahme des Temperaturfühlers ausgenutzt werden kann.

In einer weiteren Ausführungsvariante des erfindungsgemäß vorgeschlagenen kombinierten Druck- und Temperatursensors wird der Sensorkörper rohrförmig ausgebildet und eine Membran zur Erfassung des Drucks innerhalb des rohrförmigen Sensorkörpers befestigt, wobei die Membran zur Erfassung des Drucks eine ringförmig verlaufende Ausnehmung aufweist. Dadurch ist die Materialstärke der Membran geschwächt. Oberhalb dieser durch die ringförmige Ausnehmung gebildeten Schwächungszone können Si-Dehnungsmessstreifen angebracht werden, um ein Drucksignal bei Beaufschlagung der Membran durch den Druck des Mediums, welches in einem Druckraum auf die Membran wirkt, zu erfassen. In dieser Ausführungsvariante ist die Abdeckung, in welcher der Temperaturfühler zentrisch in Bezug auf den rohrförmigen Sensorkörper aufgenommen ist, an der Unterseite der Membran, die eine zentrische Öffnung für den Temperaturfühler aufweist, befestigt. Die Abdeckung, die einen domförmigen Ansatz an der Unterseite der Membran bildet, kann in unterschiedlichen Längen ausgebildet werden und so derart angepasst werden, dass der Kopf des Temperaturfühlers zentrisch möglichst weit in das Medium geführt wird, dessen Temperatur zu erfassen ist. Die Abdeckung, die den domförmigen Ansatz bildet, kann - wie oben erwähnt - an der Unterseite der im rohrförmigen Sensorkörper befestigten Membran thermisch befestigt werden. Die Membran kann aber auch so gestaltet werden, dass diese mit dem domförmigen Ansatz zur zentrischen Aufnahme des Temperaturfühlers ein Bauteil bildet.

### Zeichnung

Anhand der Zeichnung wird die Erfindung nachstehend eingehender beschrieben. Es zeigt:
- Figur 1: einen Schnitt durch eine erste Ausführungsvariante des kombinierten Druck- und Temperatursensors gemäß der vorliegenden Erfmdung mit einer als Ringmembran ausgeführten Membran sowie einer an einer medienzugewandten Seite des Sensorkörpers vorgesehenen Abdeckung, in welcher der zentrisch im Sensorkörper angeordnete Temperaturfühler endet,
- Figur 1.1: einen Schnitt durch den Sensorkörper gemäß des Schnittverlaufes I.I bis I.I in Figur 1,
- Figur 1.2: einen Schnittverlauf gemäß I.II bis I.II in Figur 1 durch die als Ringmembran ausgebildete Membran,
- Figur 1.3: einen Schnitt durch den Sensorkörper, der mit einer Vielzahl von Druckkanälen ausgeführt ist, die den zentrischen Kanal zur Aufnahme des Temperaturfühlers umgeben,
- Figur 1.4: eine Ausführungsvariante des Sensorkörpers, aufgebaut aus zwei konzentrisch zueinander angeordneten Rohren,
- Figur 2: eine weitere Ausführungsvariante des erfindungsgemäß vorgeschlagenen kombinierten Druck- und Temperatursensors mit einer Membran, die eine ringförmige Ausnehmung aufweist, und einem an der Unterseite der Membran zentrisch angeordneten domförmigen Ansatz zur Aufnahme des Temperaturfühlers und
- Figur 3: eine weitere Ausführungsvariante des erfindungsgemäß vorgeschlagenen Druck- und Temperatursensors, bei welchem ein Kanal zur zentrischen Aufnahme des Temperaturfühlers in der Membran ausgeführt ist.

### Ausführungsbeispiele

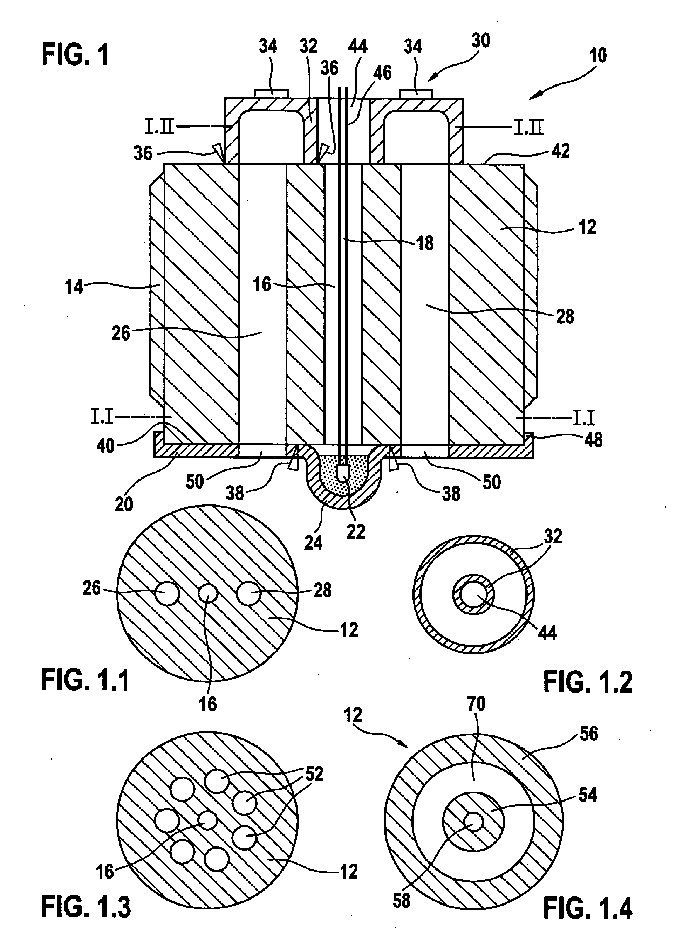

Figur 1 zeigt eine erste Ausführungsvariante des erfindungsgemäß vorgeschlagenen kombinierten Druck- und Temperatursensors.

Die in Figur 1 dargestellte erste Ausführungsvariante eines kombinierten Druck- und Temperatursensors 10 weist einen Sensorkörper 12 auf, an dessen Außenseite ein Gewindeabschnitt 14 ausgebildet ist. Der Sensorkörper 12 weist einen zentrisch ausgeführten Kanal 16 auf, in dem ein Temperaturfühler 18 aufgenommen ist. Der Temperaturfühler 18 umfasst einen Kopf 22, der von einer Abdeckung 20 umgeben ist, die an einer medienseitigen Stirnseite 40 des in Figur 1 einteilig ausgeführten Sensorkörpers 12 aufgenommen ist. Die Abdeckung 20 an der medienseitigen Stirnseite 40 des Sensorkörpers 12 umfasst einen domförmigen Ansatz 24. Die Abdeckung 20 kann besonders vorteilhaft als Tiefziehbauteil gefertigt werden, in welchem der domförmige Ansatz 24 in einem Arbeitsgang ausgebildet werden kann.

Beidseits des zentrisch im Sensorkörper 12 ausgeführten Kanals 16 zur Aufnahme des Temperaturfühlers 18 verlaufen ein erster Druckkanal 26 sowie ein zweiter Druckkanal 28. Die Druckkanäle 26 und 28 fluchten mit Öffnungen 50 in der Abdeckung 20, die an der medienseitigen Stirnseite 40 des Sensorkörpers 12 aufgenommen ist. Über die Öffnungen 50 und den ersten und zweiten Druckkanal 26, 28 wird der Druck des Mediums durch den Sensorkörper 12 an eine Membran 30 übertragen. Die Membran 30 ist in der Ausführungsvariante gemäß Figur 1 als eine Ringmembran 32 ausgeführt, die an einer medienabgewandten Stirnseite 42 des einteiligen Sensorkörpers 12 mittels stoffschlüssiger Fügestellen 36 befestigt ist. Bei der Ringmembran 32 handelt es sich bevorzugt um eine gelochte Membran, wobei ein Loch in dieser als Boss-Struktur ausgeführt werden kann. Dies bedeutet, dass der drucksensitive Teil der Membran 32 sich konzentrisch um eine Öffnung in der Mitte erstreckt. Die Messung der Dehnung der Ringmembran 32 kann entweder mittels aufgeglaster Si-Strukturen 34 (Si-Dehnungsmessstreifen) erfolgen oder durch eine Dehnmessstruktur in Form einer Metalldünnschicht realisiert werden. Durch die Verwendung einer derart ausgeformten Ringmembran 32 kann in der Mitte eine Kontaktdurchführung 44 geschaffen werden, durch welche die Kontakte 46 des Temperaturfühlers 18 aus dem Sensorkörper 12 nach außen geführt werden können.

Der Kopf 22 des zentrisch angeordneten Temperaturfühlers 18 ist vom domförmigen Ansatz 24 der Abdeckung 20 umschlossen. Die Abdeckung 20 kann an einer stoffschlüssigen Fügestelle 38 derart an der medienseitigen Stirnseite 40 des Sensorkörpers 12 befestigt werden, dass der Hohlraum des domförmigen Ansatzes 24 gegen den Druck, der durch die Druckkanäle 26 und 28 an die Ringmembran 32 übertragen wird, abgedichtet ist. Die stoffschlüssigen Fügestellen 36 beziehungsweise 38 lassen sich in vorteilhafter Weise bei der Großserienfertigung automatisiert durch Laserschweißen erzeugen.

Mittels einer Zentrierung 48 kann die Abdeckung 20 an der medienseitigen Stirnseite 40 des Sensorkörpers 12 zentriert werden. In dem Hohlraum des domförmigen Ansatzes 24 ist zur Verbesserung der Temperaturkopplung eine wärmeleitende Vergussmasse eingelassen, welche die Messgenauigkeit des Temperaturfühlers verbessert. Als wärmeleitende Vergussmasse kommt z. B. ein Silikonleitkleber in Frage, über welchen der Kopf 22 des Temperaturfühlers 18 darüber hinaus innerhalb des domförmigen Ansatzes 24 fixierbar ist.

Figur 1.1 zeigt einen Schnitt gemäß des Schnittverlaufes I.I bis I.I in Figur 1.

Aus der Darstellung gemäß Figur 1.1 geht hervor, dass der erste Druckkanal 26 und der zweite Druckkanal 28 im einteiligen Sensorkörper 12 beidseits des zentrisch ausgebildeten Kanals 16 zur Aufnahme des Temperaturfühlers 18 verlaufen. Die Anordnung des ersten Druckkanales beziehungsweise des zweiten Druckkanales 26, 28 im Schnitt gemäß Figur 1.1 kann selbstverständlich auch um 90° gedreht werden.

Figur 1.2 zeigt einen Schnitt durch die Ringmembran des kombinierten Druck- und Temperatursensors gemäß Figur 1 entsprechend des Schnittverlaufes I.II bis I.II.

Aus dem in Figur 1.2 dargestellten Schnittverlauf geht hervor, dass die als Ringmembran 32 ausgeführte Membran auf der medienabgewandten Stirnseite 42 des Sensorkörpers 12 eine Kontaktdurchführung 24 aufweist. Durch diese werden die Kontakte 46 des Temperaturfühlers 18 gemäß Figur 1 nach außen geführt. Der aus Figur 1.2 hervorgehende Hohlraum der Ringmembran 32 wird über die in Figur 1 und Figur 1.1 dargestellten ersten und zweiten Druckkanäle 26, 28 mit dem Medium beaufschlagt, dessen Druck durch die Ringmembran 32 zu messen ist.

Der Darstellung gemäß Figur 1.3 ist eine alternative Ausführungsform der Druckkanäle in dem einteilig ausgebildeten Sensorkörper 12 zu entnehmen.

Im Gegensatz zur Schnittdarstellung gemäß Figur 1.1 kann der Sensorkörper 12 auch mit einer Vielzahl 52 von Druckkanälen versehen werden. Diese umgeben den im Zentrum des einteiligen Sensorkörpers 12 ausgeführten Kanal 16 zur Aufnahme des Temperaturfühlers 18 in Ringform.

Der Darstellung gemäß Figur 1.4 ist eine alternative Ausführungsvariante des Sensorkörpers des kombinierten Druck- und Temperatursensors zu entnehmen.

In der Ausführungsvariante gemäß der Figuren 1 bis 1.3 ist der Sensorkörper 12 als einteiliges Bauelement ausgeführt. Alternativ dazu kann der Sensorkörper 12 auch als mehrteiliges Bauelement ausgeführt werden, ein Innenrohr 54 und ein dieses umgebendes Außenrohr 56 umfassend. Durch die Wahl unterschiedlicher Durchmesser für das Innenrohr 54 und das Außenrohr 56 kann ein ringförmig verlaufender Hohlraum geschaffen werden, der als Druckkanal fungiert und über den der Druck des Mediums an die Membran 30, vorzugsweise ausgeführt als Ringmembran 32, übertragen werden kann. In vorteilhafter Weise kann ein Hohlraum 58 des Innenrohres 54 als Kanal 16 zur Aufnahme des Temperaturfühlers 18 ausgenutzt werden. Im Falle einer mehrteiligen Ausführung des Sensorkörpers 12 wird zunächst das Innenrohr 54 stoffschlüssig mit der Ringmembran 32 verbunden, danach wird das Außenrohr 56 ebenfalls stoffschlüssig mit der Unterseite der Ringmembran 32 verbunden. Die erwähnten stoffschlüssigen Fügestellen werden bevorzugt als Laserschweißnähte ausgeführt, die sich automatisiert in der Großserienfertigung kostengünstig erzeugen lassen.

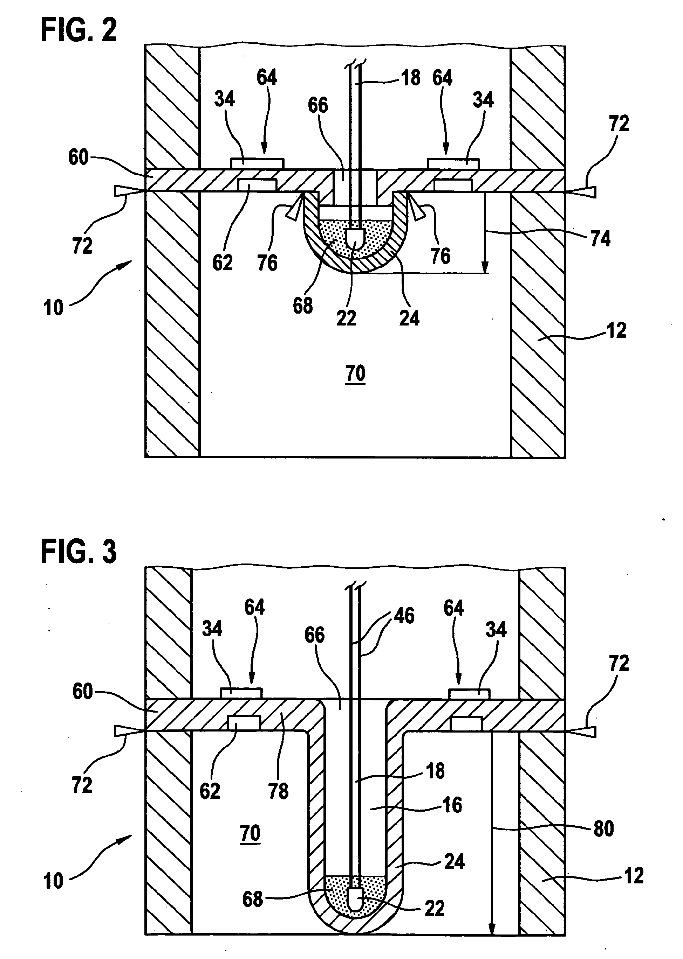

Der Darstellung gemäß Figur 2 ist eine zweite Ausführungsvariante des erfindungsgemäß vorgeschlagenen kombinierten Druck- und Temperatursensors zu entnehmen.

Aus der Darstellung gemäß Figur 2 geht hervor, dass der Sensorkörper 12 durch ein Rohr gebildet wird. Auf eine Stirnseite des Sensorkörpers 12 wird mittels einer stoffschlüssigen Verbindung eine Membran 60, bei der es sich bevorzugt um eine Stahlmembran handelt, aufgeschweißt. Die stoffschlüssige Verbindung ist mit Bezugszeichen 72 gekennzeichnet. Die Membran 60 umfasst eine ringförmig verlaufende Ausnehmung 62, welche im Membranmaterial eine Brechungszone bildet. Der ringförmig verlaufenden Ausnehmung 62 gegenüberliegend befinden sich an der Oberseite der Membran 60 ein oder mehrere Dehnungsmessstreifen 34. Alternativ kann die Dehnung der Membran 60 bei Beaufschlagung eines Druckraums 70, der von dem rohrförmigen Sensorkörper 12 begrenzt ist, als Si- oder Metalldünnschicht-DMS ausgebildet sein.

An der Unterseite der in Figur 2 dargestellten Ausführungsvariante des kombinierten Druck- und Temperatursensors befindet sich der domförmige Ansatz 24 als separates Bauteil. Der domförmige Ansatz 24 ist an einer bevorzugt stoffschlüssig ausgebildeten Fügestelle 76 mit der Unterseite der Membran 60 verbunden. Die stoffschlüssige Fügestelle 76 wird bevorzugt mittels des Laserschweißverfahrens erzeugt. In dem domförmigen Ansatz 24 ist eine wärmeleitende Vergussmasse 68 vorgesehen, in welche der Kopf 22 des Temperaturfühlers 18 eingelassen ist. Die Kontakte des Temperaturfühlers 18 werden durch die zentrische Öffnung 66 in der Mitte der Membran 60 nach außen geführt. In der Darstellung gemäß Figur 2 weist der domförmige Ansatz 24 eine erste Länge 74 auf. Mit Bezugszeichen 64 ist die Position bezeichnet, an welcher an der Oberseite der Membran 60 die Dehnungsmessstreifen 34 angeordnet sind, bevorzugt oberhalb der ringförmig verlaufenden Ausnehmung 62 der Membran 60. Unterhalb der zentrischen Öffnung 66 der Membran 60 kann eine Zentrierhilfe in Form eines Absatzes ausgebildet werden, auf welche der domförmige Ansatz 24 aufgesetzt und anschließend an der Fügestelle 66 stoffschlüssig mit der Membran 60, bei der es sich bevorzugt um eine Stahlmembran handelt, gefügt werden kann.

Die erste Länge 74 des domförmigen Ansatzes 24, welche die Eintauchtiefe des Kopfes 22 des Temperaturfühlers 18 in das Medium bestimmt, dessen Temperatur zu messen ist, kann selbstverständlich auch in einer größeren Länge ausgeführt werden, so dass der domförmige Ansatz 24 und damit der Kopf 22 weiter in den Druckraum 70 hineinragt und damit tiefer in das den domförmigen Ansatz 24 umspülende Medium eintaucht. Neben der Befestigung des domförmigen Ansatzes 24 an der Zentrierhilfe unterhalb der zentrischen Öffnung 66 dient die stoffschlüssige Fügestelle 76 auch der Abdichtung des Innenraumes des domförmigen Ansatzes 24 gegen den im Druckraum 70 herrschenden Druck und kapselt den Temperaturfühler 18 samt Kopf 22 gegen diesen.

In Figur 3 ist eine dritte Ausführungsvariante des erfindungsgemäß vorgeschlagenen kombinierten Druck- und Temperatursensors dargestellt.

Aus der Darstellung gemäß Figur 3 geht hervor, dass auch in dieser Ausführungsvariante der Sensorkörper 12 rohrförmig ausgebildet ist. An der ersten Fügestelle 72 ist die Membran 60 stoffschlüssig mit dem rohrförmig ausgeführten Sensorkörper 12 verbunden. Auch in dieser Ausführungsvariante umfasst die Membran 60 auf ihrer dem Druckraum 70 zuweisenden Seite eine ringförmig verlaufende Ausnehmung 62, die eine Schwächung der Materialstärke der Membran 60 darstellt. Oberhalb der ringförmig verlaufenden Ausnehmung 62 an der Unterseite der Membran 60 befinden sich an der Oberseite der Membran 60 in Position 64 die Dehnungsmessstreifen 34. Diese können alternativ auch als Si- oder als Metalldünnschicht-Dehnungsmessstreifen ausgeführt sein. Im Unterschied zur in Figur 2 dargestellten Ausführungsvariante der Membran 60 ist in der Membran 60 der domförmige Ansatz 24 als ein Bauteil ausgeführt. Die Membran 60 kann in ihrer in Figur 3 dargestellten einstückigen Bauweise im Wege des Tiefziehverfahrens gefertigt werden, wobei sich im Bereich des domförmigen Ansatzes 24 eine verminderte Wandstärke einstellt. Aus der Darstellung gemäß Figur 3 geht hervor, dass der domförmige Ansatz 24 in der Membran 60 in dieser Ausführungsvariante eine zweite Länge 80 aufweist. Dadurch liegt der Kopf 22 des innerhalb des domförmigen Ansatzes 24 aufgenommenen Temperaturfühlers 18 sehr weit im Druckraum 70 und taucht daher sehr weit in das Medium, dessen Druck einerseits und dessen Temperatur andererseits zu erfassen sind, ein. Der Kopf 22 des Temperaturfühlers 18 ist in eine die thermische Ankopplung an die Wandung des domförmigen Ansatzes 24 verbessernde, wärmeleitende Vergussmasse aufgenommen. Die wärmeleitende Vergussmasse 68 hat daneben die Aufgabe, den Kopf 22 und Teile des Temperaturfühlers 18 innerhalb des Hohlraums des domförmigen Ansatzes 24, d. h. innerhalb des durch diesen gebildeten Kanals 16 zur Aufnahme des Temperaturfühlers 18, zu fixieren.

In der in Figur 3 dargestellten Ausführungsvariante des kombinierten Druck- und Temperatursensors kann der in Figur 2 dargestellte Zentrieransatz an der Unterseite der Öffnung 66 zur Durchführung der Kontakte 64 des Temperaturfühlers 18 entfallen. Die Kontakte 46 des Temperaturfühlers 18 werden auf der dem Druckraum 70 abgewandten Seite aus dem Kanal 16, in dem der Temperaturfühler 18 aufgenommen ist, herausgeführt.

Sowohl die Kontakte 46 des Temperaturfühlers 18 als auch die Leitungsanschlüsse, mit denen die Dehnungsmessstreifen 34 auf der dem Druck abgewandten Seite der Membran 60 erfasst werden, sind an eine in den Figuren 1 bis 3 nicht dargestellten Auswerteelektronik angeschlossen, mit welcher ein Verdichter für eine CO₂-Klimaanlage geregelt wird.

Sämtlichen vorstehend beschriebenen Ausführungsvarianten des erfindungsgemäß vorgeschlagenen kombinierten Druck- und Temperatursensors 10 ist gemeinsam, dass der Temperaturfühler 18 zentrisch in diesem aufgenommen ist. Dadurch erhöht sich die Genauigkeit der Temperaturerfassung, und die Messung der Temperatur des den Temperaturfühler 18 beziehungsweise dessen Kopf 22 umspülenden Mediums wird unabhängig von der Position des Temperaturfühlers 18 beim Einschrauben des kombinierten Druck- und Temperatursensors 10 in eine das Medium führende Leitung. Daneben bietet die erfindungsgemäß vorgeschlagene Lösung die Vorteile einer schnellen Ansprechzeit des Temperaturfühlers 18 sowie eine zuverlässige Messung, insbesondere dann, wenn der Kopf 22 des Temperaturfühlers 18 weit in das Medium hineinragt.

Daneben bieten die in den Figuren 1 bis 3 dargestellten Ausführungsvarianten des erfmdungsgemäß vorgeschlagenen kombinierten Druck- und Temperatursensors 10 den Vorteil, dass diese in Großserie leicht hergestellt werden können. Bei der in Figur 1 dargestellten Ausführungsvariante ist insbesondere hervorzuheben, dass die Abdeckung 20 mit domförmigem Ansatz 24 sehr kostengünstig als Tiefziehbauteil gefertigt werden kann und mit ein und demselben Bauteil die Unterbringung des Kopfes 22 des Temperaturfühlers 18 realisiert wird und durch die thermische Fügestelle 68 eine Abdichtung des Hohlraumes des domförmigen Ansatzes 24 gegen den Druck des Mediums erreicht wird. Bei der in Figur 3 dargestellten-Ausführungsvariante ist insbesondere hervorzuheben, dass der Aufbau des in Figur 3 dargestellten kombinierten Druck- und Temperatursensors 10 sehr einfach ist, wenn die Membran 60 als Tiefziehbauteil gefertigt wird, in der in einem Arbeitsgang der domförmige Ansatz 24 entsprechend der Eintauchtiefe in das-Medium ausgeführt werden kann. Hier ist die einfache Herausführung der Kontakte 46 aus dem Kanal 16 zur Aufnahme des Temperaturfühlers 18 hervorzuheben. Besonders einfach ist bei der in Figur 3 dargestellten Ausführungsvariante der Aufbau des Sensorkörpers 12, mit dem die tiefgezogene Membran 60 einfach entlang einer ringförmig verlaufenden thermischen Fügestelle 72 verbunden werden kann.

## Patentansprüche

1. Kombinierter Druck- und Temperatursensor (10) mit einem Temperaturfühler (18) und einem Sernsorkörper (12; 54, 56), im welchem mindestens ein Kanal (16, 58) zur Aufnahme des Temperaturfühlers (18) und mindestens ein Kanal (26, 28) zur Erfassung eines Druckes ausgebildet sind, wobei der mindestens eine Kanal (26, 28) zur Erfassung eines Drucks auf der dem Sensorkörper (12, 54, 56) zugewandten Seite eines Drucksensors (30, 60) mündet, **dadurch gekennzeichnet, dass** der mindestens eine Kanal (16, 58) zur Aufnahme des Temperaturfühlers (18) zentrisch im Sensorkörper (12; 54, 56) verläuft und der Temperaturfühler (18) zentrisch im Sensorkörper (12; 54, 56) angeordnet ist.

2. Kombinierter Druck- und Temperatursensor gemäß Anspruch 1, **dadurch gekennzeichnet, dass** der Temperaturfühler (18) in einen als Bohrung ausgeführten Kanal (16) des Sensorkörpers (12) oder im Hohlraum (58) eines Innenrohres (54) eines mehrteiligen Sensorkörpers (54, 56) aufgenommen ist.

3. Kombinierter Druck- und Temperatursensor gemäß Anspruch 1 , **dadurch gekennzeichnet, dass** der Temperaturfühler (18) an einer medienseitigen Stirnseite (40) des Sensorkörpers (12; 54, 56) von einem zentrisch ausgebildeten, domförmigen Ansatz (24) einer Abdeckung (20) umschlossen ist.

4. Kombinierter Druck- und Temperatursensor gemäß Anspruch 1, **dadurch gekennzeichnet, dass** im Sensorkörper (12) zwei Kanäle (26, 28) zur Erfassung des Druckes oder einer Anzahl (52) von Kanälen zur Erfassung des Druckes verlaufen.

5. Kombinierter Druck- und Temperatursensor gemäß Anspruch 2, **dadurch gekennzeichnet, dass** zwischen dem Innenrohr (54) und einem Außenrohr (56) eines Sensorkörpers (54, 56) ein ringförmiger Druckraum (70) gebildet ist.

6. Kombinierter Druck- und Temperatursensor gemäß der Ansprüche 1 bis 5, **dadurch gekennzeichnet, dass** an einer medienabgewandten Seite (42) des Sensorkörpers (12; 54, 56) eine bevorzugt als Ringmembran (32) ausgeführte Membran (30) angeordnet ist, die eine zentral angeordnete Kontaktdurchführung (44) aufweist und/oder an ihrer dem Medium abgewandten Seite Dehnungsmessstreifen (34) aufweist.

7. Kombinierter Druck- und Temperatursensor gemäß Anspruch 1, **dadurch gekennzeichnet, dass** der Sensorkörper (12) einen als Membran ausgeführten Drucksensor (60) umfasst, der an seiner einen Druckraum (70) zuweisenden Seite eine ringförmig verlaufende Ausnehmung (62) aufweist.

8. Kombinierter Druck- und Temperatursensor gemäß Anspruch 1, **dadurch gekennzeichnet, dass** der als Membran ausgeführte Drucksensor (60) eine zentrisch angeordnete Öffnung (66) für einen Temperaturfühler (18) umfasst, der von einem mit dem Drucksensor (60) stoffschlüssig verbundenen, domförmigen Ansatz (24) umschlossen ist.

9. Kombinierter Druck- und Temperatursensor gemäß Anspruch 7, **dadurch gekennzeichnet, dass** in dem als Membran ausgeführten Drucksensor (60) im Zentrum der domförmige Ansatz (24) tiefgezogen ausgeführt ist.

10. Kombinierter Druck- und Temperatursensor gemäß der Ansprüche 3, 8 oder 9, **dadurch gekennzeichnet, dass** der domförmige Ansatz (24) in unterschiedlichen, die Eintauchtiefe des Temperaturfühlers (18) in das Medium definierenden Längen (74, 80) ausführbar ist.

11. Kombinierter Druck- und Temperatursensor gemäß Anspruch 1, **dadurch gekennzeichnet, dass** der Temperaturfühler (18) an der dem Medium zugewandten Seite in eine wärmeleitende Vergussmasse (68) eingebettet ist.

## Claims

1. Combined pressure and temperature sensor (10) with a temperature detector (18) and a sensor body (12; 54, 56), in which at least one channel (16, 58) for receiving the temperature detector (18) and at least one channel (26, 28) for registering a pressure are formed, the at least one channel (26, 28) for registering a pressure opening out on the side of a pressure sensor (30, 60) that is facing the sensor body (12, 54, 56), **characterized in that** the at least one channel (16, 58) for receiving the temperature detector (18) extends centrically in the sensor body (12; 54, 56) and the temperature detector (18) is arranged centrically in the sensor body (12; 54, 56).

2. Combined pressure and temperature sensor according to Claim 1, **characterized in that** the temperature detector (18) is received in a channel (16) of the sensor body (12) formed as a bore or in the cavity (58) of an inner tube (54) of a multipart sensor body (54, 56).

3. Combined pressure and temperature sensor according to Claim 1, **characterized in that** the temperature detector (18) is enclosed at an end face (40) of the sensor body (12; 54, 56) on the medium side by a centrically formed, dome-shaped extension (24) of a cover (20).

4. Combined pressure and temperature sensor according to Claim 1, **characterized in that** two channels (26, 28) for registering the pressure or a number (52) of channels for registering the pressure extend in the sensor body (12).

5. Combined pressure and temperature sensor according to Claim 2, **characterized in that** an annular pressure chamber (70) is formed between the inner tube (54) and an outer tube (56) of a sensor body (54, 56).

6. Combined pressure and temperature sensor according to Claims 1 to 5, **characterized in that** arranged on a side (42) of the sensor body (12; 54, 56) that is facing away from the medium is a diaphragm (30), which is preferably formed as an annular diaphragm (32), has a centrally arranged contact lead-through (44) and/or has strain gauges (34) on its side facing away from the medium.

7. Combined pressure and temperature sensor according to Claim 1, **characterized in that** the sensor body (12) comprises a pressure sensor (60), which is formed as a diaphragm and has on its side facing a pressure chamber (70) an annularly extending recess (62).

8. Combined pressure and temperature sensor according to Claim 1, **characterized in that** the pressure sensor (60) formed as a diaphragm comprises a centrically arranged opening (66) for a temperature detector (18), which is enclosed by a dome-shaped extension (24) integrally connected to the pressure sensor (60).

9. Combined pressure and temperature sensor according to Claim 7, **characterized in that** the dome-shaped extension (24) is deep-drawn in the centre of the pressure sensor (60) formed as a diaphragm.

10. Combined pressure and temperature sensor according to Claim 3, 8 or 9, **characterized in that** the dome-shaped extension (24) can be formed in various lengths (74, 80), defining the depth of immersion of the temperature detector (18) into the medium.

11. Combined pressure and temperature sensor according to Claim 1, **characterized in that** the temperature detector (18) is embedded in a heat-conducting sealing compound (68) on the side facing the medium.

## Revendications

1. Détecteur combiné (10) de pression et de température qui présente une sonde de température (18) et un corps de détecteur (12; 54, 56) dans lequel sont formés au moins un canal (16, 58) de reprise de la sonde de température (18) et au moins un canal (26, 28) de détection d'une pression,
le ou les canaux (26, 28) de détection de pression débouchant sur le côté d'un détecteur de pression (30, 60) tourné vers le corps de détecteur (12; 54, 56),
**caractérisé en ce que**
le ou les canaux (16, 58) de reprise de la sonde de température (18) s'étendent au centre du corps de détecteur (12; 54, 56) et
**en ce que** la sonde de température (18) est disposée au centre du corps de détecteur (12; 54, 56).

2. Détecteur combiné de pression et de température selon la revendication 1, **caractérisé en ce que** la sonde de température (18) est logée dans un canal (16) en forme d'alésage ménagé dans le corps de détecteur (12) ou dans la cavité (58) d'un tube intérieur (54) d'un corps de détecteur (54, 56) en plusieurs pièces.

3. Détecteur combiné de pression et de température selon la revendication 1, **caractérisé en ce que** sur le côté frontal (40), situé du côté du fluide, du corps de détecteur (12; 54, 56), la sonde de température (18) est entourée par un appendice (24) en forme de dôme formé au centre d'un recouvrement (20).

4. Détecteur combiné de pression et de température selon la revendication 1, **caractérisé en ce que** deux canaux (26, 28) de détection de pression ou un nombre (52) de canaux de détection de pression s'étendent dans le corps de détecteur (12).

5. Détecteur combiné de pression et de température selon la revendication 2, **caractérisé en ce qu'**un espace annulaire sous pression (70) est formé entre le tube intérieur (54) et un tube extérieur (56) du corps de détecteur (54, 56).

6. Détecteur combiné de pression et de température selon les revendications 1 à 5, **caractérisé en ce qu'**une membrane (30) configurée de préférence comme membrane annulaire (32) est disposée sur le côté (42), non tourné vers le fluide, du corps de détecteur (12; 54, 56), présente un passage de contact (44) disposé en son centre et/ou un ruban (34) de mesure d'allongement sur son côté non tourné vers le fluide.

7. Détecteur combiné de pression et de température selon la revendication 1, **caractérisé en ce que** le corps de détecteur (12) comprend un détecteur de pression (60) configuré en forme de membrane et présentant une découpe annulaire (62) sur son côté tourné vers un espace sous pression (70).

8. Détecteur combiné de pression et de température selon la revendication 1, **caractérisé en ce que** le détecteur de pression (60) configuré en forme de membrane comprend une ouverture centrale (66) prévue pour une sonde de température (18) qui est entourée par un appendice (24) en forme de dôme relié en correspondance de matière au détecteur de pression (60).

9. Détecteur combiné de pression et de température selon la revendication 7, **caractérisé en ce que** l'appendice (24) en forme de dôme est réalisé par emboutissage au centre du détecteur de pression (60) configuré en forme de membrane.

10. Détecteur combiné de pression et de température selon les revendications 3, 8 ou 9, **caractérisé en ce que** l'appendice (24) en forme de dôme peut être réalisé en différentes longueurs (74, 80) qui définissent la profondeur de pénétration de la sonde de température (18) dans le fluide.

11. Détecteur combiné de pression et de température selon la revendication 1, **caractérisé en ce que** sur le côté tourné vers le fluide, la sonde de température (18) est incorporée dans une pâte de coulée (68) conductrice de la chaleur.
